# EUROPÄISCHE PATENTSCHRIFT

(11) **EP 1 948 481 B1**
(45) Veröffentlichungstag und Bekanntmachung des Hinweises auf die Patenterteilung: **17.02.2010**
(21) Anmeldenummer: 06818415.9
(22) Anmeldetag: 08.11.2006
(51) Int. Cl.: B60R 16/037, B60K 37/00

(54) **INFORMATIONSEINRICHTUNG, VORZUGSWEISE IN EINEM KRAFTFAHRZEUG, UND VERFAHREN ZUR INFORMATION ÜBER FAHRZEUGDATEN, INSBESONDERE FAHRZEUGFUNKTIONEN UND DEREN BEDIENUNG**
INFORMATION DEVICE, PREFERABLY IN A MOTOR VEHICLE, AND METHOD FOR PROVIDING INFORMATION CONCERNING VEHICLE DATA, PARTICULARLY VEHICLE FUNCTIONS AND THE OPERATION THEREOF
SYSTEME D'INFORMATION SITUE DE PREFERENCE DANS UN VEHICULE AUTOMOBILE, ET PROCEDE POUR FOURNIR DES INFORMATIONS PAR L'INTERMEDIAIRE DE DONNEES RELATIVES AU VEHICULE, EN PARTICULIER AUX FONCTIONS DU VEHICULE ET A LEUR UTILISATION

(30) Priorität: 11.11.2005 DE 102005053978; 11.02.2006 DE 102006006338
(43) Veröffentlichungstag der Anmeldung: 30.07.2008
(73) Patentinhaber: Volkswagen AG, 38436 Wolfsburg (DE)
(72) Erfinder: WÄLLER, Christoph, 38102 Braunschweig (DE); WU, Yongmei, 38442 Wolfsburg (DE); BOHNENBERGER, Thorsten, 38122 Braunschweig (DE)
(74) Vertreter: Patentanwälte Bressel und Partner
(86) Internationale Anmeldenummer: PCT/EP2006/010700
(87) Internationale Veröffentlichungsnummer: WO 2007/054284

(56) Entgegenhaltungen:
- EP-A- 0 893 308
- EP-A- 1 462 317
- EP-A1- 1 431 127
- US-B1- 6 401 029

## Beschreibung

Die Erfindung betrifft eine Informationseinrichtung, vorzugsweise in einem Kraftfahrzeug, mit mindestens einer Ausgabeeinrichtung und einer Verarbeitungseinrichtung, der eine Speichereinrichtung zugeordnet ist, in welcher Fahrzeugdaten, insbesondere Daten von Fahrzeugfunktionen und/oder Fahrzeugelementen, deren Funktion und/oder Bedienung und/oder Handhabung und/oder Daten von Fahrzeugzuständen und/oder deren Veränderung abgelegt sind, sowie ein Verfahren zur Information über Fahrzeugdaten, insbesondere Fahrzeugfunktionen und/oder Fahrzeugelementen und deren Bedienung, Funktion und/oder Handhabung mittels einer Ausgabeeinrichtung.

In Fahrzeugen gemäß dem Stand der Technik sind alle für den Benutzer wissenswerten technischen Merkmale des Kraftfahrzeugs sowie dessen Ausstattungseigentümlichkeiten in der Regel in einem, in gedruckter Form vorliegenden Handbuch bzw. Bordbuch enthalten. Zwar verfügen die meisten Fahrzeuge mittlerweile über diverse Diagnosesysteme zur Problemerkennung, sowohl hinsichtlich des Zustands von Fahrzeugkomponenten als auch hinsichtlich von kritischen Fahr- bzw. Fahrersituationen. Doch werden die von einem Diagnosesystem festgestellten Probleme vor oder während der Fahrt dem Benutzer meist lediglich mit Hilfe von Signallämpchen bzw. aufleuchtenden Symbolen oder auch durch kurze Textnachrichten oder Piktogramme angezeigt. Die auf diese Weise übermittelte Information bedeutet, dass ein bestimmtes Problem mit dem Fahrzeug vorliegt, wobei zur Lösung dieses Problems in der Regel der Fälle das Handbuch konsultiert werden muss, welches beispielsweise in gedruckter Form im Handschuhfach vorhanden ist. Das Handbuch wird dabei in der Regel nur dann genutzt, wenn der Fahrer ein Problem mit seinem Fahrzeug bzw. mit dessen Bedienung hat. Die Nutzung des Handbuchs wird gemeinhin als aufwändig, komplex und eher mühsam betrachtet, da viele Benutzer eher ungern längere gedruckte Texte lesen und insbesondere umfangreiche technische Inhalte häufig als abschreckend empfinden.

In der WO 01/27704 A1 ist ein Verfahren zur Erstellung von Unterlagen oder Informationen für ein in der Serie und am Fließband herstellbares technisches Produkt offenbart, wobei während des Produktionsvorgangs unmittelbar am Fließband ein Produktbuch erzeugt wird, die wesentlichen technischen Merkmale des Produktes in das Produktbuch aufgenommen werden, die für die Benutzung und/oder Bedienung des Produktes relevanten Hinweise in dem Produktbuch vermerkt werden und die für das jeweilige Produktexemplar charakteristischen, individuellen Ausstattungseigentümlichkeiten in das diesem Produktexemplar speziell zugeordnete und auf dieses Produktexemplar zugeschnittene Produktbuch aufgenommen werden. Dabei kann das Produktbuch auch als EDV-Datensatz erstellt werden. Dieses Verfahren zielt darauf ab, ein möglichst leicht verständliches und aussagekräftiges Produktbuch unter Vermeidung von unnötiger Lagerhaltung bei möglichst geringen Kosten herzustellen, wobei das Produktbuch auf überflüssige Information soweit wie möglich verzichten soll und dennoch die individuellen Sonderausstattungen eines Produkts berücksichtigen soll. Das Verfahren bietet jedoch keine Unterstützung, wenn der Benutzer beim Vorliegen eines Problems während der Benutzung zunächst aus eigenem Antrieb das Produktbuch konsultieren muss, um mittels eigener Nachforschungen die für das bestehende Problem relevante Information darin zu lokalisieren und zu identifizieren, sich diese dann anzueignen, auszuwerten und gemäß dem ihm zur Verfügung stehenden Erfahrungshorizont zu interpretieren, um dann selbst entscheiden zu müssen, welche Maßnahmen er zur Lösung des Problems ergreifen kann oder soll. Dieses Vorgehen ist jedoch selbst bei einem leicht verständlich aufbereiteten Produktbuch wenig komfortabel, komplex und zeitaufwändig und birgt zudem das Risiko von Fehlinterpretationen und -entscheidungen durch den Benutzer.

In der DE 19941973 A1 ist ein Verfahren und eine Vorrichtung zur aktiven Hilfestellung eines Kraftfahrzeugführers mittels mindestens eines Steuergeräts und einer Ein- und Anzeigeeinheit offenbart. Dabei kann das Steuergerät auf die Daten von fahrzeugzustandsrelevanten Sensoren und Steuergeräten und/oder Komfortsteuergeräten und/oder interne oder externe Datenbanken zugreifen, wodurch eine automatische Unterstützung bei der Kommunikation zwischen dem Kraftfahrzeugführer und dem Fahrzeugsystem gegeben wird. Dabei wird insbesondere durch das Steuergerät ein kritischer Fahrzeugzustand durch Auswertung der Daten der fahrzeugrelevanten Sensoren und Steuergeräten erfasst, sodann eine Liste von möglichen Handlungen des Kraftfahrzeugführers auf den erfassten kritischen Fahrzeugzustand erstellt, der erfasste kritische Fahrzeugzustand und die möglichen Handlungen des Kraftfahrzeugführers werden auf der Anzeigeeinheit dargestellt und eine durch den Kraftfahrzeugführer ausgewählte Handlung wird durch das Steuergerät durchgeführt. Dabei werden die vom System angebotenen Informationen jedoch stets lediglich als Text in Listenform dargestellt. Eine Veränderung dieser Art der Informationsausgabe ist nicht vorgesehen. Da es sich bei dem beschriebenen System auch nicht um eine Informationsvorrichtung, sondern um ein System zur aktiven Hilfestellung durch automatisches Ausführen von Aktionen mittels eines Steuergerätes handelt, ist dieses System auch nicht dazu geeignet, den Benutzer möglichst umfassend über fahrzeuginteme Vorgänge bzw. technische Details zu informieren und ihm die Durchführung möglicher Maßnahmen möglichst verständlich zu erläutern.

Des Weiteren schlägt die DE 10 2005 002 277 A1 ein Informationssystem für ein Kraftfahrzeug mit einer Datenverarbeitungsvorrichtung und einer Anzeigeeinrichtung zur Darstellung von gespeicherten Informationen, die mittels einer Bedieneinrichtung auswählbar sind vor, wobei es sich bei den Informationen um Informationen eines elektronischen Ratgeber-Handbuches handelt. Über die Bedieneinrichtung sind einzelne Kapitel des Ratgeber-Handbuches zur Darstellung durch die Anzeigeinrichtung auswählbar. Unter anderem kann das elektronische Ratgeber-Handbuch Anleitungen zur Verhaltensweise in Notfall bzw. Pannensituationen sowie Hinweise zu Erste-Hilfe-Maßnahmen enthalten.

Aus der EP 0 893 398 A2 ist eine in einem Fahrzeug monitierbare Vorrichtung bzw ein Verfahren zum Steuern eines personifizierten Agenten auf einem Display im Fahrzeuginnenraum für eine Kommunikation mit einem Benutzer nach dem Oberbegriff des Anspruchs 1 bzw des Anspruchs 12 bekannt. Mit Fahrzeugzuständen korrelierte Kommunikationsprogramme werden automatisch ausgerührt.

Der Erfindung liegt die technische Aufgabe zugrunde, eine Einrichtung zur Darstellung von Informationen von Fahrzeugfunktionen und ein Verfahren zur Information über Fahrzeugdaten, insbesondere Fahrzeugfunktionen und deren Bedienung und Anzeige, zu schaffen, mit deren Hilfe ein Benutzer auf einfache Weise die Bedienung und Handhabung der Fahrzeugfunktionen und die Funktion von Bedieneinrichtungen und elementen erlernen kann.

Die Aufgabe wir durch die Merkmale der Patentansprüche 1 und 12 gelöst. Vorteilhafte Aus- und Weiterbildungen sind in den Unteransprüchen dargestellt.

Gemäß der Erfindung werden Fahrzeugdaten, die Daten über Fahrzeugfunktionen und deren Bedienung oder Handhabung, insbesondere über den Fahrzeugfunktionen zugeordnete Bedieneinrichtungen, umfassen auf eine Auswahl eines Benutzers animiert auf einer als Anzeigeeinrichtung ausgebildeten Ausgabeeinrichtung dargestellt. Dies geschieht, indem die Bedieneinrichtungen der aktuell zu erläuternden Fahrzeugfunktion, vorzugsweise in ihrer Anordnung im Kraftfahrzeug, auf der Anzeigeeinrichtung optisch dargestellt wird. Die Bedienbetätigung der Bedieneinrichtungen, gegebenenfalls mit ihrer Wirkung auf die Fahrzeugfunktion, die Handhabung der Fahrzeugelemente und gegebenenfalls ihre Bewegung während der Handhabung und/oder die Änderung der Fahrzeugzustände wird erfindungsgemäß animiert auf der Anzeigeeinrichtung dargestellt. Damit erhält der Benutzer leicht verständliche Darstellung der Funktionen und der Fahrzeugelemente, die ihm hilft, auf richtige Weise zu benutzen.

Nach einer Ausführung der Erfindung erfolgt die optische und akustische Erklärung der Fahrzeugfunktionen, ihrer Bedienung und/oder Handhabung und/oder der Fahrzeugelemente, gegebenenfalls mit ihrer Handhabung und/oder der Fahrzeugzustände über eine animierte Darstellung einer künstlichen Person, eines so genannten Avatars, auf der Anzeigeeinrichtung, wobei über eine Sprachausgabe eine entsprechende akustische Unterstützung gegeben wird. Vorzugsweise ist der Avatar derart ausgebildet, dass durch entsprechende Bewegungen des Avatars die optischen und akustischen Erklärungen unterstützt werden. Mit anderen Worten, der Avatar moderiert die Informationswiedergabe.
Dadurch werden dem Benutzer die entsprechenden Informationen noch verständlicher und leichter erfassbar zugänglich gemacht.

Eine weitere Ausführungsform der Erfindung sieht vor, dass die der aktuell zu erklärende Fahrzeugfunktion zugeordnete Bedieneinrichtung, gegebenenfalls eine zugehörige Anzeige auf der Anzeigeeinrichtung, und/oder ein aktuell zu erklärendes Fahrzeugelement zur einfacheren Erkennung optisch hervorgehoben oder optisch verändert auf der Anzeigeeinrichtung dargestellt wird.

Neben der Darstellung der Bedieneinrichtung der aktuell zu erklärenden Fahrzeugfunktion und/oder des Fahrzeugelementes im statischen Zustand kann zur verbesserten Erläuterung die Bedieneinrichtung in ihrer Bedienbewegung und das Fahrzeugelement in seiner Handhabungbewegung dargestellt werden.

Eine andere Ausführungsform der Erfindung sieht vor, dass das Bedienelement der aktuell zu erklärenden Fahrzeugfunktion oder das aktuell zu erklärende Fahrzeugelement in Abhängigkeit der momentanen Informationsausgabe auf der Anzeigeeinrichtung in seiner Größe verändert dargestellt wird. Soll beispielsweise der Benutzer über den Ort des Bedienelementes oder des Fahrzeugelementes im Fahrzeug informiert werden, erfolgt die Darstellung des Bedienelementes oder des Fahrzeugelementes im Kontext zu den anderen Bedienelementen oder Fahrzeugteilen auf der Anzeigeeinrichtung, seine Darstellung auf der Anzeigeeinrichtung ist entsprechend klein. Soll das Bedienelement oder das Fahrzeugelement an sich oder in seiner Funktion erläutert werden, kann vorgesehen sein, dieses aus dem Gesamtkontext heraus zu zoomen und entsprechend größer zur Detailinformation darzustellen.

Nach einer Ausführung der Erfindung ist die mindestens eine als Anzeigeeinrichtung ausgebildete Ausgabeeinrichtung Teil einer so genannten Multifunktionsbedieneinrichtung Im Fahrzeug, die unter anderem zur Bedienung von im Fahrzeug installierten Audiogeräten oder einem Navigationssystem genutzt wird. Die Informationswiedergabe ist dann vorzugsweise über eine Bedieneinrichtung der Multifunktionsbedieneinrichtung als Hilfemenü aufrufbar.

Nachfolgend wird die Erfindung anhand von Ausführungsbeispielen näher erläutert. Die zugehörigen Zeichnungen zeigen:
- Fig. 1: eine schematische Darstellung der Informationseinrichtung unter Verwendung einer Multifunktionsbedieneinrichtung,
- Fig. 2: eine Darstellung eines Hauptmenüs auf der Anzeigeeinrichtung zum Aufruf von Informationen zu Funktionalitäten des Kraftfahrzeuges
- Fig. 3a bis 3g: einen Verfahrensablauf zur Erläuterung einer Geschwindigkeitsregelanlage,
- Fig. 4a bis 4e: einen Verfahrensablauf zur Montage einer abnehmbaren Anhängervorrichtung,

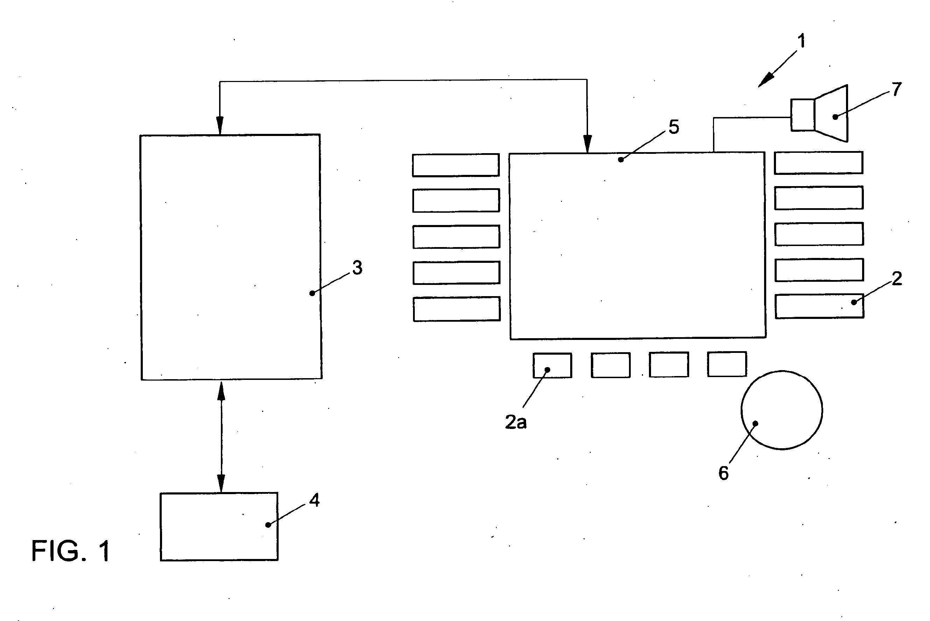

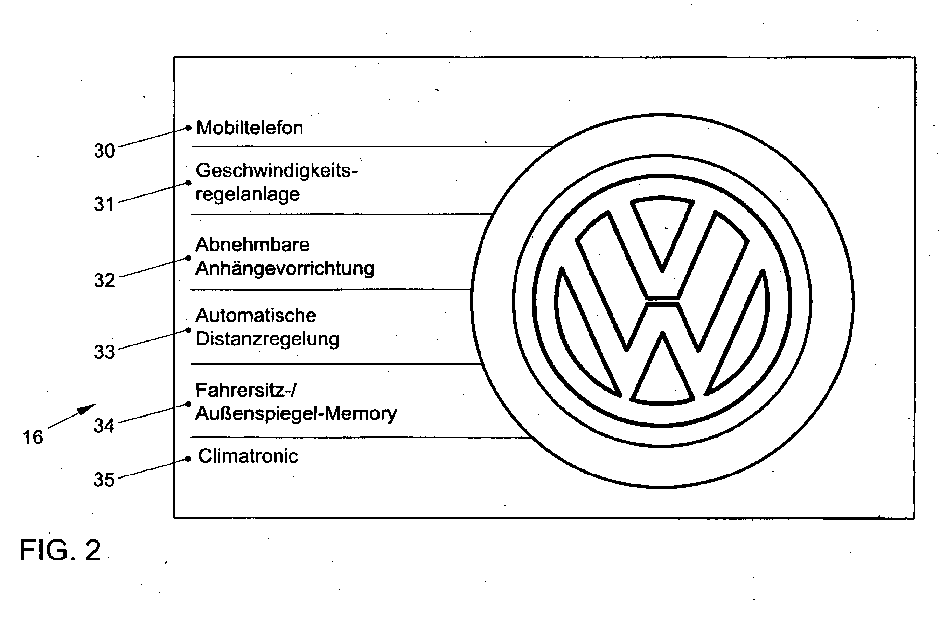

Die erfindungsgemäße Informationseinrichtung zur Erklärung und Hilfestellung zur Führung und Bedienung von Kraftfahrzeugen gemäß Fig. 1 weist eine Verarbeitungseinrichtung 3 und einen mit ihr verbundenen oder in ihr integrierten Speicher 4 auf. In dem Speicher sind Fahrzeugdaten, insbesondere Daten von Fahrzeugfunktionen, deren Bedieneinrichtungen und Anzeigen sowie Daten von Fahrzeugelementen oder - teilen sowie deren Funktion oder Handhabung sein und/oder Fahrzeugzuständen und deren Veränderungen abgelegt. Fahrzeugfunktionen können beispielsweise Funktion und Bedienung von Fahrerassistenzsystemen, Navigationssystemen oder elektrischen Fensterhebem sein. Unter Fahrzeugelementen sind beispielsweise ein Sitz und/oder der Ablauf für seinen Ausbau oder die Montage einer abnehmbaren Anhängervorrichtung zu verstehen. Im Wesentlichen kann der Speicher 4 alle Informationsinhalte, wenn gegebenenfalls auch in anderer Form aufweisen, die auch ein heute bekanntes Bedienerhandbuch beinhaltet. Im Ausführungsbeispiel ist die Verarbeitungseinrichtung 3 mit einer Multifunktionsbedieneinrichtung 1 verbunden oder in dieser integriert, welche im Fahrzeug, beispielsweise in der Mittelkonsole angeordnet ist. Eins solche Multifunktionsbedieneinrichtung ist beispielsweise aus der DE 199 41 969 A1 bekannt. Andere Ausführungsformen von Multifunktionsbedieneinrichtungen sind denkbar, so auch eine als Touch Screen ausgebildete Einrichtung. Die Multifunktionsbedieneinrichtung 1 erlaubt über eine Menüstruktur die Bedienung von unterschiedlichen elektronischen Einrichtungen des Kraftfahrzeuges, beispielsweise eines Navigationssystems oder Audiogeräten, und Applikationen. Im Ausführungsbeispiel ist ein Bedienelement 2a der Bedieneinrichtung 2 vorgesehen, das zum Aufruf eines Hilfemenüs 16 gemäß Fig. 2 dient. Über dieses Hilfemenü 16 sind Fahrzeugfunktionen, Fahrzeugelemente und/oder Fahrzeugzustände auswählbar, über welche der Benutzer Informationen, beispielsweise deren Bedienung, Anzeige im Fahrzeug oder Handhabung erhalten möchte. Im Ausführungsbeispiel sind das Mobiltelefon 30, die Geschwindigkeitsregelanlage 31, die Handhabung der abnehmbaren Anhängervorrichtung 32, die automatische Distanzregelung 33, die Bedienung der Memoryfunktion für Fahrersitz und Außenspiegel 34 und der Klimaanlage 35 vorgesehen. Es kann aber auch der Abruf anderer und weiterer Funktionalitäten, auch die Funktion und Auswahl der mit der Multifunktionsbedieneinrichtung zu bedienenden elektronischen Einrichtungen und Applikationen, wie beispielsweise der Navigationseinrichtung, vorsehen sein. Bei einer größeren Anzahl erklärbarer Funktionen und Fahrzeugelemente können die Funktionen und Fahrzeugelemente im Hauptmenü in Gruppen zusammengefasst werden. Nach Auswahl einer Funktionsgruppe ist dann die jeweilige Funktionsauswahl in einem Untermenü möglich. Die Auswahl der jeweiligen Funktionalitäten erfolgt im Ausführungsbeispiel über das Drück/Drehelement 6 oder die als Softkeys ausgebildeten Bedienelemente 2. Bei Verwendung eines Touch Screens (Berührungsbildschirm) erfolgt die Auswahl über die Berührung des jeweiligen Touchscreen-Bedienelementes.

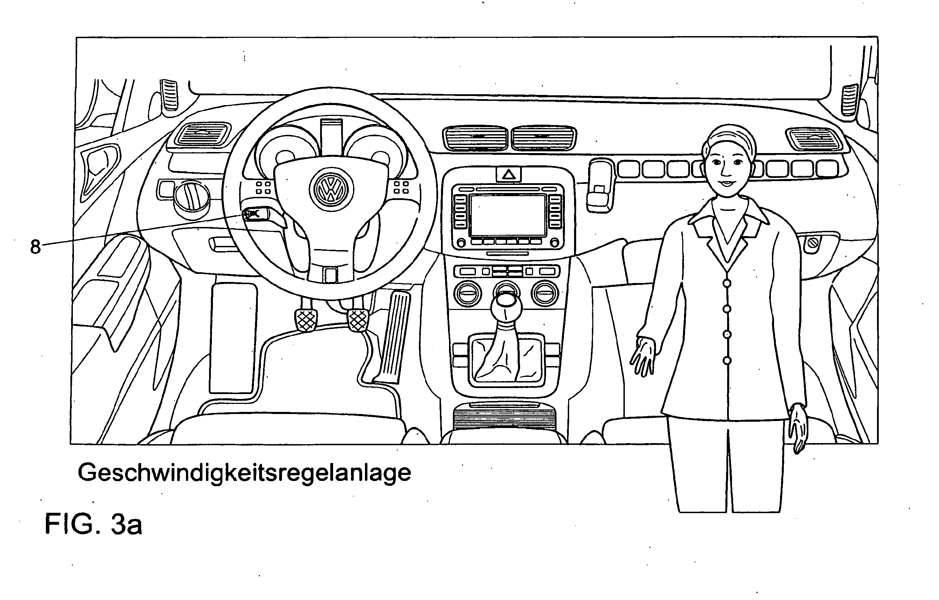

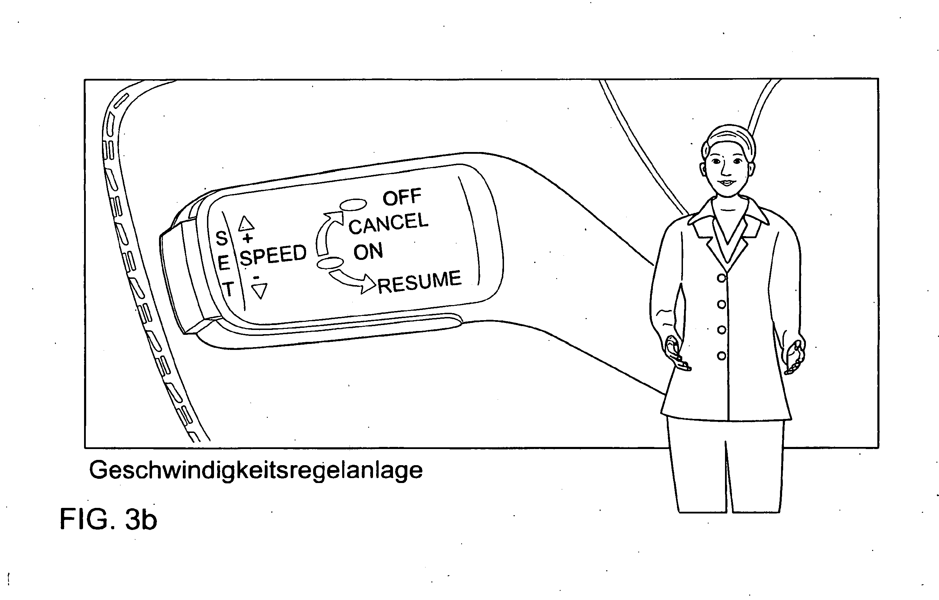

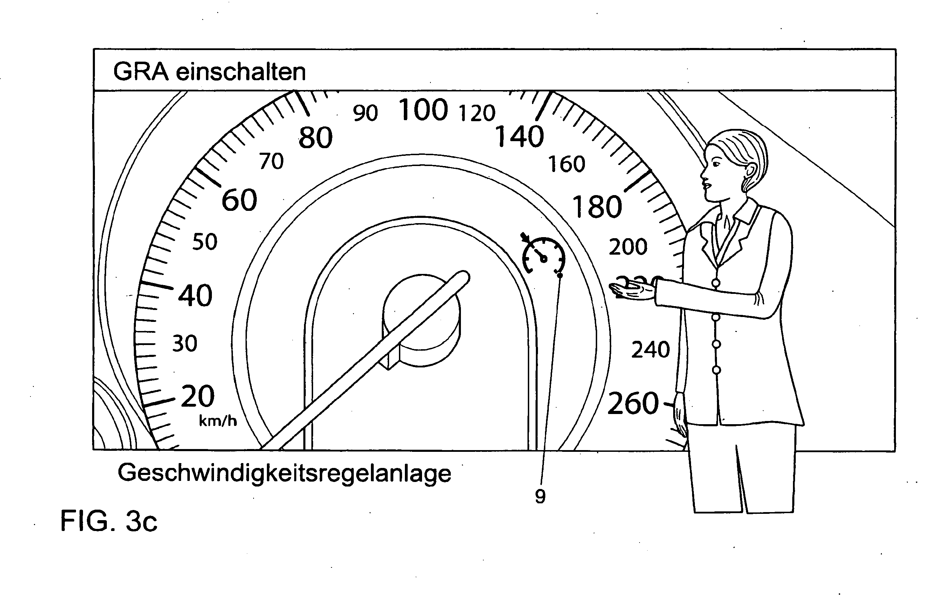

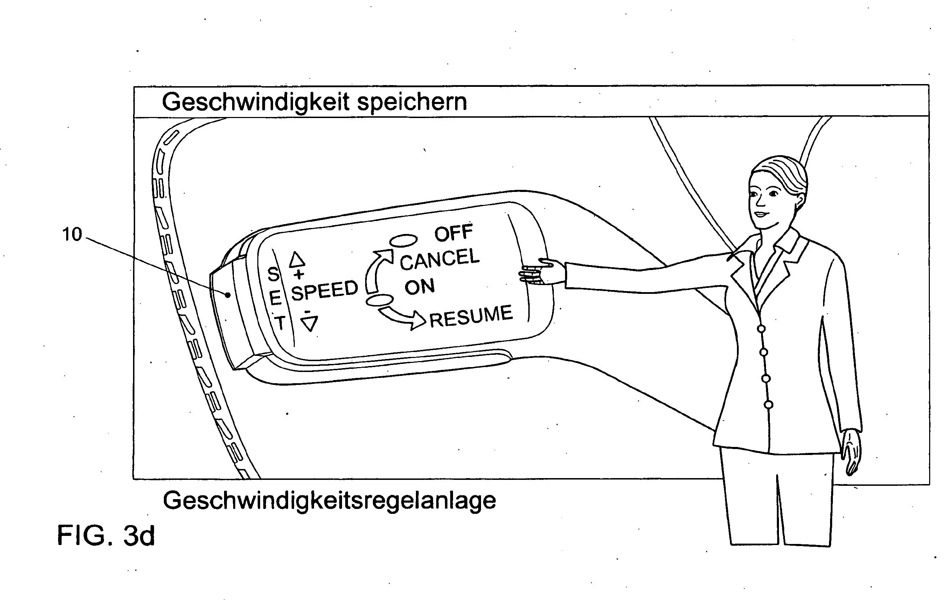

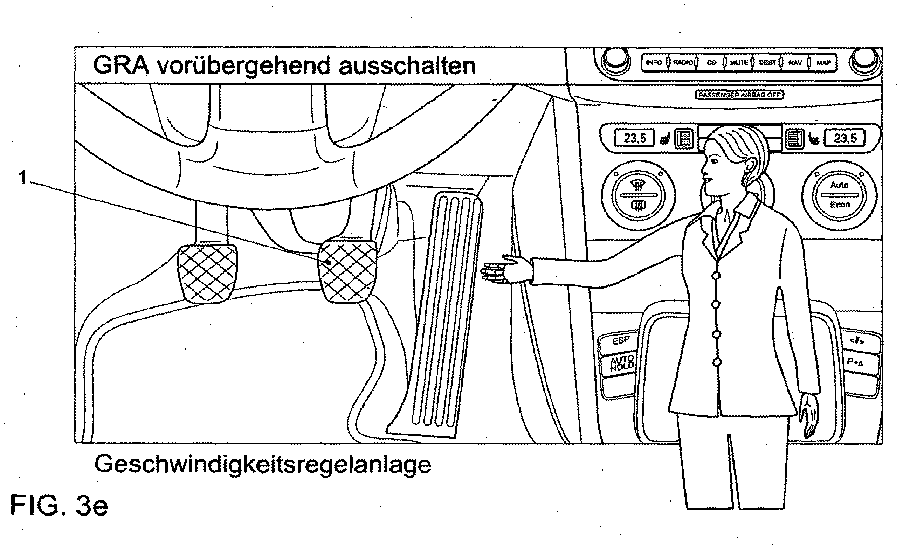

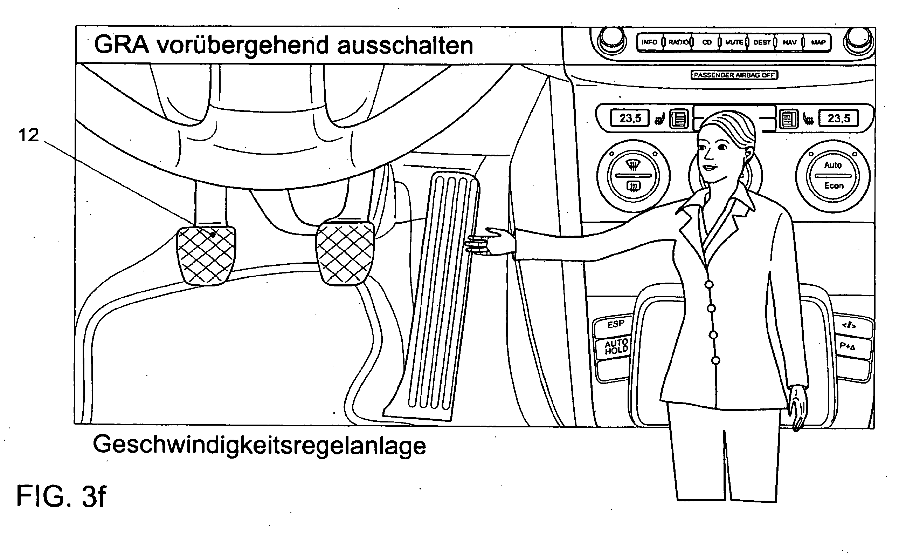

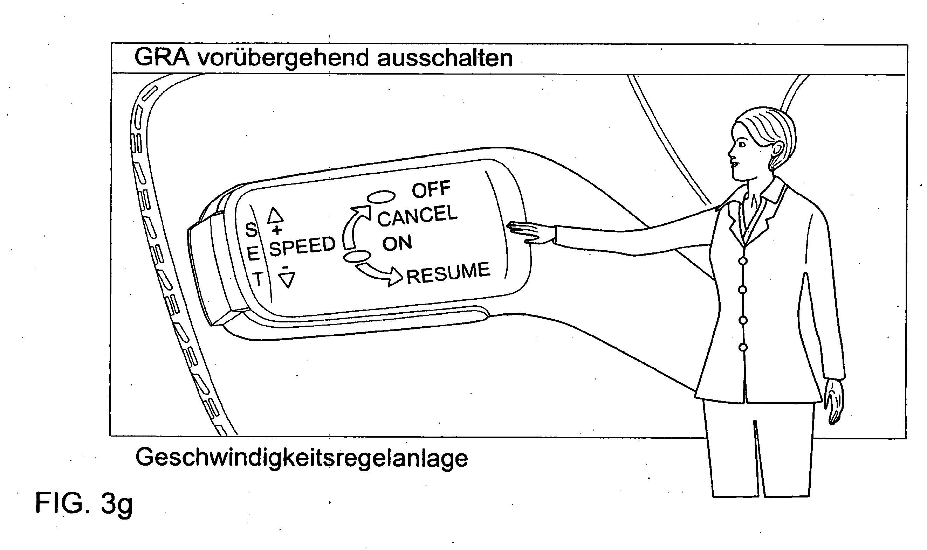

Fig. 3 zeigt den Informationsablauf zur Erklärung der Geschwindigkeitsregelanlage nach Auswahl derselben mit Hilfe eines auf der Anzeigeinrichtung 5 gezeigten Films, in welchem der Avatar 15 durch Hand- und Körperbewegungen sowie Sprachausgabe eine Erklärungsunterstützung gibt. Nach der Auswahl erscheint das Bild der Fig.3a. Der Avatar 15 teilt durch Hand und Körperbewegung und durch Sprachausgabe über die akustische Ausgabeeinrichtung 7 (Fig.1) mit: "Ich werde Ihnen zeigen, wie Sie die elektronische Geschwindigkeitsregelanlage, kurz GRA, bedienen können." In Fig. 3a ist das Cockpit des Fahrzeuges mit allen Anzeige- und Bedieneinrichtungen dargestellt. Die Bedieneinrichtung 8 der Geschwindigkeitsregelanlage mit allen seinen Bedienelementen ist farblich hervorgehoben gezeigt. Danach erscheint das Anzeigebild der Fig. 3b. Die Bedieneinrichtung 8 ist gegenüber der Darstellung in Fig.3a herangezoomt und nimmt den größten Teil der Anzeigfläche ein, sie ist auch hier farblich hervorgehoben gegenüber dem Hintergrund dargestellt. Der Avatar 15 gibt Angaben über die Funktion der Geschwindigkeitsregeiantage: " Die Geschwindigkeitsregelanlage hält eine eingestellte Geschwindigkeit zwischen 30 und 210k/h konstant." Danach gibt der Avatar 15 Informationen zum Einschalten der Geschwindigkeitsregelanlage. "Ziehen Sie diesen Hebel zum Lenkrad hin, bis er einrastet." Im Film bewegt sich die Bedieneinrichtung 8 zum Benutzer hin. Im Filmablauf erscheint Fig. 3c, die einen Ausschnitt des Kombünstrumentes mit der Geschwindigkeitsanzeige und dem Symbol 9 zeigt. Der Avatar 15 weist durch eine Handbewegung und die Sprachausgabe: "Nach dem Einschalten erscheint dieses Symbol im Kombiinstrument." Danach erklärt der Avatar 15 das Setzen bzw. Speichern der gewünschten Geschwindigkeit: "Fahren Sie mit der gewünschten Geschwindigkeit und drücken Sie die Taste Set seitlich am Hebel" Die Taste Set 10 wird gegenüber der restlichen Bedieneinrichtung zur verbesserten Erkennbarkeit hervorgehoben (Fig. 3d). Nach dem Setzen der Geschwindigkeit erklärt der Avatar 15 die Möglichkeit des Erhöhens und Erniedrigens der gespeicherten Geschwindigkeit auf ähnliche Weise. Zur Darstellung, wie das vorübergehende Ausschalten der Geschwindigkeitsregelanlage mittels des Avatars 15 erklärt wird, wird Fig. 3e - 3g des Filmes herangezogen. In den Figuren ist das jeweilige Bedienelement, Bremspedal 11, Kupplungspedal 12 oder Bedienhebel 8, welches zum Ausschalten verwendet werden kann, gegenüber dem Hintergrund hervorgehoben. Zusätzlich wird die Erklärung der Bedienfunktiori über die Bewegung und die Sprachausgabe des Avatars 15 unterstützt: "Treten sie das Bremspedal, treten Sie bei schaltgetriebenen Fahrzeugen das Kupplungspedal oder drücken Sie den Bedienhebel leicht vom Lenkrad weg. Zum Wiedereinschalten der Geschwindigkeitsregelanlage lassen Sie das Bremspedal bzw. das Kupplungspedal los und ziehen Sie den Bedienhebel leicht zum Lenkrad hin."

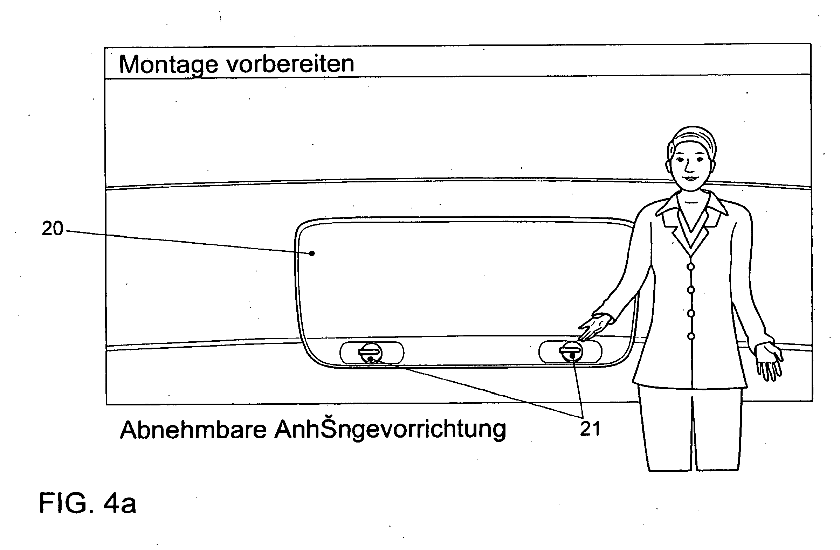

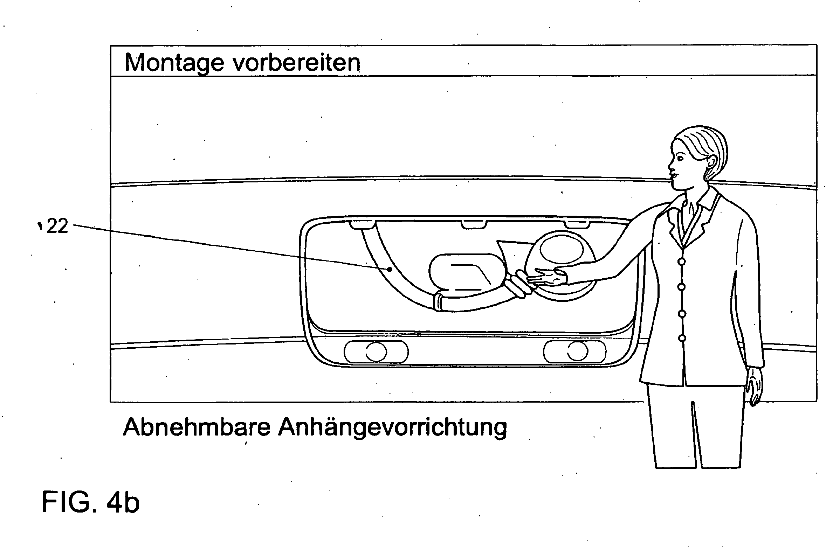

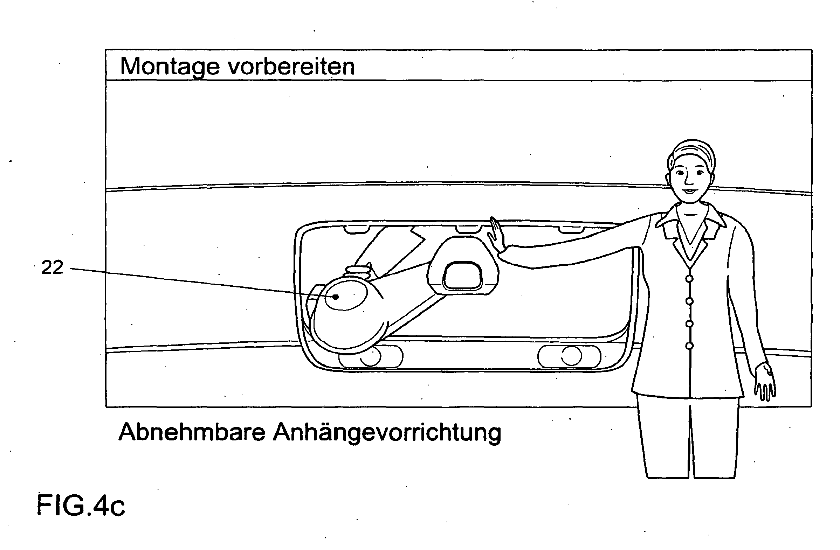

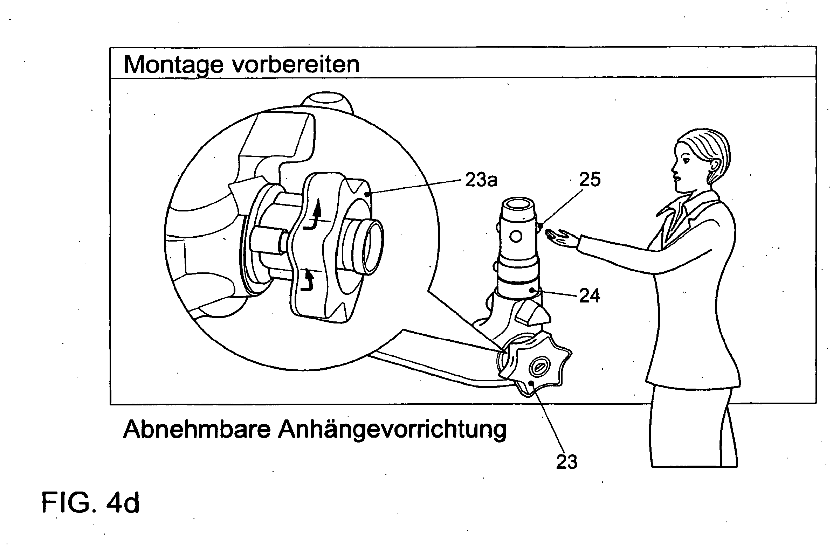

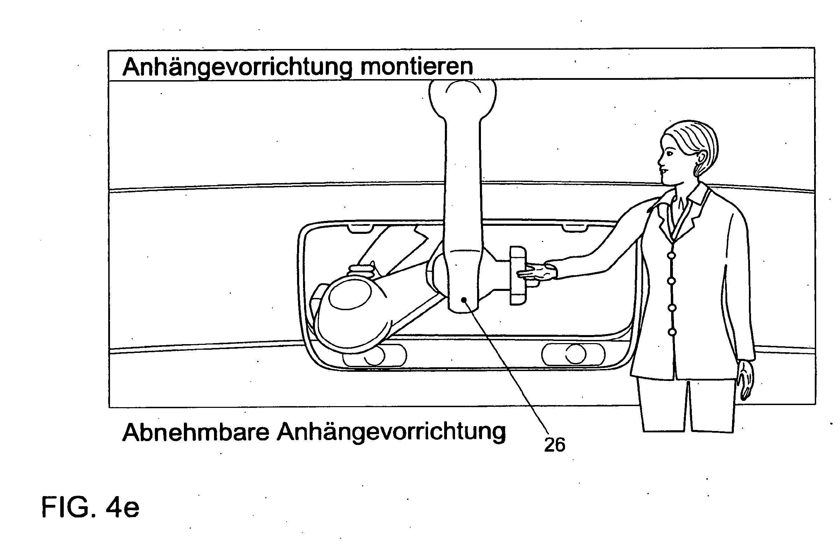

Fig. 4 zeigt den animierten Ablauf zur Erklärung der Montage der abnehmbaren Anhängervorrichtung an hand von mehreren Standbildern. Zu Beginn führt der Avatar 15 aus: "Die abnehmbare Anhängevorrichtung befindet sich unter dem Gepäckraumboden beim Bordwerkzeug. Ich werde Ihnen nun zeigen, wie Sie die Anhängevorrichtung montieren und demontieren können. Entfernen Sie die Abdeckung unterhalb des hinteren Stossfängers, indem sie beide Schnellverschlüsse um 90 grad drehen." Auf der Anzeigeeinrichtung ist ein Teil des hinteren Stossfängers mit der Abdeckung 20 gezeigt. Die Abdeckung 20 ist gegenüber dem Stossfänger farblich hervorgehoben dargestellt. Des Weiteren sind die Schnellverschlüsse 21 gezeigt, die wiederum gegenüber der Abdeckung für eine gute Erkennbarkeit farblich hervorgehoben sind. Im Film wird gezeigt, wie und in welche Richtung die Schnellverschlüsse 21 gedreht werden müssen, damit die Abdeckung entnommen werden kann. Der Avatar 15 weist durch Hand- und Körperbewegungen auf die Abdeckung 20 und die Schnellverschlüsse hin. Danach wird die Montage der Anhängevorrichtung auf der Anhängesteckdose erklärt. Fig. 4b zeigt das Staufach mit der Anhängesteckdose als Teil des Montageablaufs. Der Avatar 15 erklärt mit Unterstützung seiner Hand- und Körperbewegungen: "Schwenken Sie die Anhängesteckdose so weit es geht zur Seite, dadurch wird die Aufnahme für den Kugelkopf zugänglich gemacht." Auf der Anzeigeinrichtung wird das Verschenken der Anhängesteckdose 22 von seiner Ausgangsposition in Fig.4b zu der Verschenkposition in Fig. 4c in seiner Bewegung mit Unterstützung durch eine gezielte Bewegung des Avatars 15 gezeigt. "Prüfen Sie, ob die Aufnahme, das Handrad, der Schaft und die Verriegelungskugeln der Anhängevorrichtung sauber und nicht beschädigt sind." Das Handrad 23, der Schaft 24 und die Verriegelungskugeln 25 werden nacheinander in Zusammenhang mit der entsprechenden Sprachausgabe des Avatars 15 farblich hervorgehoben. Der Avatar 15 fährt fort: "Nur wenn die Anhängevorrichtung vorgespannt ist, lässt sie sich ordnungsgemäß anbringen. So spannen Sie die Anhängevorrichtung vor, ziehen sie mit der rechten Hand das Handrad heraus (Das vergrößert dargestellte Handrad 23a wird wiederum farblich hervorgehoben (Fig.4d.), halten Sie es in dieser Stellung und drehen das Handrad in Pfeilrichtung. Der Kugelkopf ist jetzt vorgespannt. So montieren Sie die Anhängevorrichtung (Fig. 4e). Führen Sie die vorgespannte Anhängevorrichtung in die Aufnahme ein, drücken Sie die Anhängevorrichtung kräftig nach oben, bis sie einrastet. (Die Anhängevorrichtung 26 wird auch hier farblich hervorgehoben, nach gezeigter Verrastung verändert die Anhängevorrichtung 26 wiederum ihre Farbe.)Dann kontrollieren Sie, ob die Anhängevorrichtung ordnungsgemäß befestigt wurde. Drehen Sie den Schlüssel linksherum, ziehen ihn ab und setzen Sie die Abdeckung auf."

### Bezugszeichenliste

- 1: Multifuriktionsbedieneinrichtung
- 2: Bedieneinrichtung
- 2a: Bedienelement
- 3: Verarbeitungseinrichtung
- 4: Speicher
- 5: Anzeigeeinrichtung
- 6: Dreh/Drückelement
- 7: Ausgabeeinrichtung
- 8: Bedieneinrichtung, Bedienhebel
- 9: Symbol
- 10: Taste
- 11: Bremspedal
- 12: Kupplungspedal
- 15: künstliche, animierte Person, Avatar
- 16: Hilfemenü
- 20: Abdeckung
- 21: Schnellverschlüsse
- 22: Anhängersteckdose
- 23: Handrad
- 23a: Handrad
- 24: Schaft
- 25: Verriegelungskugeln
- 26: Anhängevorrichtung
- 30: Mobiltelefon
- 31: Geschwindigkeitsregelanlage
- 32: Abnehmbare Anhängervorrichtung
- 33: Automatische Distanzregelung
- 34: Fahrersitz-/Außenspiegel-Memory
- 35: Climatronic

## Patentansprüche

1. Informationseinrichtung in einem Kraftfahrzeug mit mindestens einer Ausgabeeinrichtung (5,7) und einer Verarbeitungseinrichtung (3), der mindestens eine Speichereinrichtung (4) zugeordnet ist, in welcher Fahrzeugdaten, die Daten über eine Funktionsweise und/oder Bedienung und/oder Handhabung von Fahrzeugfunktionen (30, 31, 33-35) umfassen, abgelegt sind, wobei über die mindestens eine Ausgabeeinrichtung (5,7) die Fahrzeugdaten, die die Bedienung oder die Handhabung der Fahrzeugfunktionen (30,31,33-35) beschreiben und/oder erläutern, zumindest teilweise animiert ausgebbar sind, **dadurch gekennzeichnet, dass** die mindestens eine Ausgabeeinrichtung eine Anzeigeeinrichtung (5) umfasst, auf der die Bedieneinrichtung (8,10,11,12) der aktuell zu erklärenden Fahrzeugfunktion (30,31-33-35) optisch dargestellt ist, deren Funktionsweise und/oder Handhabung durch Animation optisch und/oder akustisch erklärt wird, wobei die erklärende Ausgabe der Fahrzeugdaten durch einen Benutzer auswählbar ist.

2. Informationseinrichtung nach Anspruch 1, **dadurch gekennzeichnet, dass** die Bedieneinrichtung (8,10,11,12) der aktuell zu erklärenden Fahrzeugfunktion (30,31-33-35) optisch in ihrer Anordnung im Kraftfahrzeug dargestellt ist.

3. Informationseinrichtung nach Anspruch 1 oder 2, **dadurch gekennzeichnet, dass** die optische und/oder akustische Erklärung der Fahrzeugfunktion (30,31-33-35) und ihrer zugeordneten Bedieneinrichtung (8, 10,11,12) über eine animierte Darstellung einer künstlichen Person (15) auf der Anzeigeinrichtung (5) und eine akustische Ausgabeeinrichtung (7) erfolgt.

4. Informationseinrichtung nach Anspruch 2 oder 3, **dadurch gekennzeichnet, dass** die der aktuell zu erklärenden Bedienfunktion zugeordnete Bedieneinrichtung (8,10,11,12) auf der Anzeigeinrichtung (5) optisch hervorhebbar oder veränderbar ist.

5. Informationseinrichtung nach einem der Anspruche 2 bis 4, **dadurch gekennzeichnet, dass** die Bedienbewegung der der aktuell zu erklärenden Bedienfunktion zugeordneten Bedieneinrichtung (8,10,11,12) darstellbar ist.

6. Informationseinrichtung nach einem der Ansprüche 2 bis 5, **dadurch gekennzeichnet, dass** die optische Darstellung der der aktuell zu erklärenden Bedienfunktion zugeordneten Bedieneinrichtung (8,10,11,12) auf der mindestens einen Anzeigeeinrichtung (5) in ihrer Größe veränderbar darstellbar ist und/oder zoombar ist.

7. Informationseinrichtung nach einem der Ansprüche 1 bis 6, **dadurch gekennzeichnet, dass** die Fahrzeugdaten zusätzlich Daten über Fahrzeugelemente (20-26, 32) und deren Bedienung, Funktionsweise und/oder Handhabung und/oder Daten über Fahrzeugzustände umfassen und auf der mindestens einen Anzeigeeinrichtung (5) beim Ausgeben der Fahrzeugdaten mindestens ein Fahrzeugelement (20-26, 32) und/oder seine Funktion und/oder seine Handhabung optisch darstellbar ist und seine Funktion und/oder Handhabung durch Animation optisch und/oder akustisch erklärbar ist.

8. Informationseinrichtung nach Anspruch 7, **dadurch gekennzeichnet, dass** die optische und/oder akustische Erklärung des Fahrzeugelementes (20-26,32) und/oder seine Funktion und/oder Handhabung über eine animierte Darstellung einer künstlichen Person (15) auf der Anzeigeeinrichtung (5) und/oder eine akustische Ausgabeeinrichtung (7) erfolgt.

9. Informationseinrichtung nach Anspruch 7 oder 8, **dadurch gekennzeichnet, dass** das aktuell zu erklärende Fahrzeugelement (20-26, 32) auf der Anzeigeeinrichtung (5) optisch hervorhebbar oder optisch veränderbar ist.

10. Informationseinrichtung nach einem der Ansprüche 7 bis 9, **dadurch gekennzeichnet, dass** die Handhabung und/oder die Funktion des Fahrzeugelementes (20-26,32) in seiner Anordnung im Kraftfahrzeug auf der Anzeigeeinrichtung (5) darstellbar ist.

11. Informationseinrichtung nach einem der Ansprüche 1 bis 6, **dadurch gekennzeichnet, dass** die mindestens eine Ausgabeeinrichtung (5,7) Teil einer Multifunktionsbedieneinrichtung (1) ist, wobei die erklärende Ausgabe der Fahrzeugdaten über ein Hilfemenü (16) aufrufbar ist.

12. Verfahren zur Information über Fahrzeugdaten, die Daten über Fahrzeugfunktionen (30,31-33-35) und deren Bedienung, Funktionsweise und/oder Handhabung umfassen, mittels mindestens einer Ausgabeeinrichtung (5,7), wobei über die mindestens eine Ausgabeeinrichtung (5,7) die Fahrzeugdaten zumindest teilweise animiert ausgegeben werden, **dadurch gekennzeichnet, dass** eine Auswahl einer gewünschten erklärenden Ausgabe der Fahrzeugdaten erfasst wird und auf mindestens einer Anzeigeeinrichtung (5) der Ausgabeeinrichtung die Bedieneinrichtung (8, 10,11,12) der aktuell zu erklärenden Bedienfunktion optisch dargestellt wird und deren Funktionsweise und/oder Handhabung über eine animierte Darstellung optisch und/oder akustisch erklärt wird.

13. Verfahren nach Anspruch 12, **dadurch gekennzeichnet, dass** die Bedieneinrichtung (8,10,11,12) der aktuell zu erklärenden Fahrzeugfunktion (30,31-33-35) optisch in ihrer Anordnung im Kraftfahrzeug dargestellt wird.

14. Verfahren nach Anspruch 12 oder 13, **dadurch gekennzeichnet, dass** die optische und/oder akustische Erklärung der Fahrzeugfunktion (30,31-33-35) und ihrer Bedieneinrichtung (8,10,11,12) über eine animierte Darstellung einer künstlichen Person (15) auf der Anzeigeeinrichtung (5) und eine akustische Ausgabe erfolgt und/oder durchgeführt wird.

15. Verfahren nach einem der Ansprüche 12 bis 14, **dadurch gekennzeichnet, dass** die der aktuell zu erklärenden Fahrzeugfunktion (30,31-33-35) zugeordnete Bedieneinrichtung (8,10,11,12) auf der Anzeigeeinrichtung (5) optisch hervorgehoben oder verändert wird.

16. Verfahren nach einem der Ansprüche 12 bis 15, **dadurch gekennzeichnet, dass** die Bedienbewegung der der aktuell zu erklärenden Fahrzeugfunktion (30,31-33-35) zugeordneten Bedieneinrichtung (8,10,11,12) auf der Anzeigeeinrichtung (5) dargestellt wird.

17. Verfahren nach einem der Ansprüche 12 bis 16, **dadurch gekennzeichnet, dass** die optische Darstellung der der aktuell zu erklärenden Fahrzeugfunktion (30,31-33-35) zugeordneten Bedieneinrichtung (8,10,11,12) auf der Anzeigeeinrichtung (5) vergrößert und/oder verkleinert wird.

18. Verfahren nach Anspruch 17, **dadurch gekennzeichnet, dass** eine Vergrößerung oder Verkleinerung der Darstellung in Abhängigkeit des Erklärungsablaufes der Fahrzeugfunktion (30,31-33-35) oder der der Fahrzeugfunktion zugeordneten Bedieneinrichtung (8,10,11,12) erfolgt.

19. Verfahren nach einem der Ansprüche 12 bis 18, **dadurch gekennzeichnet, dass** die Fahrzeugdaten zusätzlich Daten über Fahrzeugelementen (20-26, 32) und deren Bedienung, Funktionsweise und/oder Handhabung und/oder Daten über Fahrzeugzustände umfassen und mindestens ein Fahrzeugelement (20-26,32) optisch darstellbar ist und/oder dargestellt wird und seine Funktion und/oder Handhabung durch Animation optisch und/oder akustisch erklärbar ist und/oder erklärt wird.

20. Verfahren nach Anspruch 19, **dadurch gekennzeichnet, dass** die optische und/oder akustische Erklärung des Fahrzeugelementes (20-26,32) und/oder seine Funktion und/oder seine Handhabung über eine animierte Darstellung einer künstlichen Person (15) auf der Anzeigeeinrichtung (5) und/oder eine akustische Ausgabeeinrichtung (7) erfolgt und/oder durchgeführt wird.

21. Verfahren nach Anspruch 19 oder 20, **dadurch gekennzeichnet, dass** das aktuell zu erklärende Fahrzeugelement (20-26,32) auf der Anzeigeeinrichtung (5) optisch hervorgehoben wird oder optisch verändert wird.

22. Verfahren nach einem der Ansprüche 19 bis 21, **dadurch gekennzeichnet, dass** die Handhabung und/oder die Funktion des Fahrzeugelementes (20-26,32) in seiner Anordnung im Kraftfahrzeug auf der Anzeigeeinrichtung (5) dargestellt wird.

## Claims

1. Information device in a motor vehicle having at least one output device (5, 7) and a processing device (3) which has at least one associated memory device (4) which stores vehicle data which comprise data about a manner of operation and/or operator control and/or handling of vehicle functions (30, 31, 33-35), wherein the at least one output device (5, 7) can be used to output the vehicle data which describe and/or explain the operator control or the handling of the vehicle functions (30, 31, 33-35) at least partially in animated form, **characterized in that** the at least one output device comprises a display device (5) which visually displays the operator control device (8, 10, 11, 12) for the vehicle function (30, 31-33-35) which currently needs to be explained, the manner of operation and/or handling of which is visually and/or audibly explained by animation, wherein the explanatory output of the vehicle data can be selected by a user.

2. Information device according to Claim 1, **characterized in that** the operator control device (8, 10, 11, 12) for a vehicle function (30, 31-33-35) which currently needs to be explained has its arrangement in the motor vehicle visually displayed.

3. Information device according to Claim 1 or 2, **characterized in that** the vehicle function (30, 31-33-35) and the associated operator control device (8, 10, 11, 12) therefor are visually and/or audibly explained by means of animated display of an artificial person (15) on the display device (5) and by means of an audible output device (7).

4. Information device according to Claim 2 or 3, **characterized in that** the operator control device (8, 10, 11, 12) associated with the operator control function which currently needs to be explained can be visually highlighted or altered on the display device (5).

5. Information device according to one of Claims 2 to 4, **characterized in that** the operator control movement of the operator control device (8, 10, 11, 12) associated with the operator control function which currently needs to be explained can be displayed.

6. Information device according to one of Claims 2 to 5, **characterized in that** the visual display of the operator control device (8, 10, 11, 12) associated with the operator control function which currently needs to be explained can be displayed on the at least one display device (5) modifiable in its magnitude and/or can be zoomed.

7. Information device according to one of Claims 1 to 6, **characterized in that** the vehicle data additionally comprise data about vehicle elements (20-26, 32) and the operator control, manner of operation and/or handling thereof and/or data about vehicle states, and the at least one display device (5) can visually display at least one vehicle element (20-26, 32) and/or the function thereof and/or the handling thereof and can visually and/or audibly explain the function and/or handling thereof by animation when the vehicle data are output.

8. Information device according to Claim 7, **characterized in that** the vehicle element (20-26, 32) and/or the function and/or handling thereof is/are visually and/or audibly explained by means of animated display of an artificial person (15) on the display device (5) and/or by means of an audible output device (7).

9. Information device according to Claim 7 or 8, **characterized in that** the vehicle element (20-26, 32) which currently needs to be explained can be visually highlighted or visually altered on the display device (5).

10. Information device according to one of Claims 7 to 9, **characterized in that** the handling and/or the function of the vehicle element (20-26, 32) in its arrangement in the motor vehicle can be displayed on the display device (5).

11. Information device according to one of Claims 1 to 6, **characterized in that** the at least one output device (5, 7) is part of a multifunctional operator control device (1), wherein the explanatory output of the vehicle data can be called up using a help menu (16).

12. Method for information about vehicle data which comprise data about vehicle functions (30, 31-33-35) and the operator control, manner of operation and/or handling thereof using at least one output device (5, 7), wherein the at least one output device (5, 7) is used to output the vehicle data at least partially in animated form, **characterized in that** selection of a desired explanatory output for the vehicle data is detected and at least one display device (5) of the output device visually displays the operator control device (8, 10, 11, 12) for the operator control function which currently needs to be explained and visually and/or audibly explains the manner of operation and/or handling thereof by means of an animated display.

13. Method according to Claim 12, **characterized in that** the operator control device (8, 10, 11, 12) for the vehicle function (30, 31-33-35) which currently needs to be explained has its arrangement in the motor vehicle visually displayed.

14. Method according to Claim 12 or 13, **characterized in that** the visual and/or audible explanation of the vehicle function (30, 31-33-35) and the operator control device (8, 10, 11, 12) therefor are done and/or carried out by means of animated display of an artificial person (15) on the display device (5) and by means of an audible output.

15. Method according to one of Claims 12 to 14, **characterized in that** the operator control device (8, 10, 11, 12) associated with the vehicle function (30, 31-33-35) which currently needs to be explained is visually highlighted or altered on the display device (5).

16. Method according to one of Claims 12 to 15,
**characterized in that** the operator control movement of the operator control device (8, 10, 11, 12) associated with the vehicle function (30, 31-33-35) which currently needs to be explained is displayed on the display device (5).

17. Method according to one of Claims 12 to 16,
**characterized in that** the visual display of the operator control device (8, 10, 11, 12) associated with the vehicle function (30, 31-33-35) which currently needs to be explained is magnified and/or reduced on the display device (5).

18. Method according to Claim 17, **characterized in that** the display is magnified or reduced on the basis of the explanation procedure for the vehicle function (30, 31-33-35) or the operator control device (8, 10, 11, 12) associated with the vehicle function.

19. Method according to one of Claims 12 to 18,
**characterized in that** the vehicle data additionally comprise data about vehicle elements (20-26, 32) and the operator control, manner of operation and/or handling thereof and/or data about vehicle states, and at least one vehicle element (20-26, 32) can be visually displayed and/or is visually displayed and the operation and/or handling thereof can be visually and/or audibly explained and/or is explained by animation.

20. Method according to Claim 19, **characterized in that** the vehicle element (20-26, 32) and/or the function thereof and/or the handling thereof is/are visually and/or audibly explained by means of animated display or of an artificial person (15) on the display device (5) and/or by means of an audible output device (7).

21. Method according to Claim 19 or 20, **characterized in that** the vehicle element (20-26, 32) which currently needs to be explained is visually highlighted or visually altered on the display device (5).

22. Method according to one of Claims 19 to 21,
**characterized in that** the handling and/or the function of the vehicle element (20-26, 32) in its arrangement in the motor vehicle is/are displayed on the display device (5).

## Revendications

1. Dispositif d'information dans un véhicule automobile comprenant au moins un dispositif de diffusion (5, 7) et un dispositif de traitement (3) auquel est associé au moins un dispositif de mémorisation (4) dans lequel sont stockés des données du véhicule, lesquelles englobent des données sur un mode de fonctionnement et/ou l'utilisation et/ou le maniement de fonctions du véhicule (30, 31, 33-35), les données du véhicule qui décrivent et/ou expliquent l'utilisation ou le maniement des fonctions du véhicule (30, 31, 33-35) pouvant être diffusées sous forme au moins partiellement animée par le biais de l'au moins un dispositif de diffusion (5, 7), **caractérisé en ce que** l'au moins un dispositif de diffusion comprend un dispositif d'affichage (5) sur lequel est représenté visuellement le dispositif de commande (8, 10, 11, 12) de la fonction du véhicule (30, 31, 33-35) actuellement à expliquer, dont le mode de fonctionnement et/ou le maniement est expliqué visuellement par une animation et/ou de manière sonore, la diffusion explicative des données du véhicule pouvant être sélectionnée par un utilisateur.

2. Dispositif d'information selon la revendication 1, **caractérisé en ce que** la disposition dans le véhicule automobile du dispositif de commande (8, 10, 11, 12) de la fonction du véhicule (30, 31, 33-35) actuellement à expliquer est représentée visuellement.

3. Dispositif d'information selon la revendication 1 ou 2, **caractérisé en ce que** l'explication visuelle et/ou sonore de la fonction du véhicule (30, 31, 33-35) et du dispositif de commande (8, 10, 11, 12) qui lui est associé s'effectue par le biais d'une représentation animée d'une personne artificielle (15) sur le dispositif d'affichage (5) et d'un dispositif de diffusion sonore (7).

4. Dispositif d'information selon la revendication 2 ou 3, **caractérisé en ce que** le dispositif de commande (8, 10, 11, 12) associé à la fonction de commande actuellement à expliquer peut être mis en valeur ou modifié visuellement sur le dispositif d'affichage (5).

5. Dispositif d'information selon l'une des revendications 2 à 4, **caractérisé en ce que** le mouvement de commande du dispositif de commande (8, 10, 11, 12) associé à la fonction de commande actuellement à expliquer peut être représenté.

6. Dispositif d'information selon l'une des revendications 2 à 5, **caractérisé en ce que** la représentation visuelle du dispositif de commande (8, 10, 11, 12) associé à la fonction de commande actuellement à expliquer peut être représentée sur l'au moins un dispositif d'affichage (5) en modifiant sa taille et/ou en zoomant.

7. Dispositif d'information selon l'une des revendications 1 à 6, **caractérisé en ce que** les données de véhicule englobent des données supplémentaires sur des éléments de véhicule (20-26, 32) et leur utilisation, leur mode de fonctionnement et/ou leur maniement et/ou des données sur des états du véhicule et au moins un élément de véhicule (20-26, 32) et/ou son fonctionnement et/ou son maniement peut être représenté visuellement sur l'au moins un dispositif d'affichage (5) lors de la diffusion des données de véhicule et sa fonction et/ou son maniement peut être expliqué visuellement par animation et/ou de manière sonore.

8. Dispositif d'information selon la revendication 7, **caractérisé en ce que** l'explication visuelle et/ou sonore de l'élément de véhicule (20-26, 32) et/ou de son fonctionnement et/ou de son maniement s'effectue par le biais d'une représentation animée d'une personne artificielle (15) sur le dispositif d'affichage (5) et/ou d'un dispositif de diffusion sonore (7).

9. Dispositif d'information selon la revendication 7 ou 8, **caractérisé en ce que** l'élément de véhicule (20-26, 32) actuellement à expliquer peut être mis en valeur visuellement ou modifié visuellement sur le dispositif d'affichage (5).

10. Dispositif d'information selon l'une des revendications 7 à 9, **caractérisé en ce que** la disposition dans le véhicule automobile du maniement et/ou de la fonction de l'élément de véhicule (20-26, 32) peut être représentée sur le dispositif d'affichage (5).

11. Dispositif d'information selon l'une des revendications 1 à 6, **caractérisé en ce que** l'au moins un dispositif de diffusion (5, 7) fait partie d'un dispositif de commande multifonction (1), la diffusion explicative des données de véhicule pouvant être invoquée par le biais d'un menu d'aide (16).

12. Procédé d'information sur des données de véhicule, lesquelles englobent des données sur des fonctions du véhicule (30, 31, 33-35) et sur leur utilisation, leur mode de fonctionnement et/ou leur maniement, au moyen d'au moins un dispositif de diffusion (5, 7), les données du véhicule étant diffusées sous une forme au moins partiellement animée par le biais de l'au moins un dispositif de diffusion (5, 7), **caractérisé en ce qu'**une sélection d'une diffusion explicative souhaitée des données du véhicule est détectée et le dispositif de commande (8, 10, 11, 12) de la fonction de commande actuellement à expliquer est représenté visuellement sur au moins un dispositif d'affichage (5) du dispositif de diffusion et son mode de fonctionnement et/ou son maniement est expliqué visuellement par une représentation animée et/ou de manière sonore.

13. Procédé selon la revendication 12, **caractérisé en ce que** la disposition dans le véhicule automobile du dispositif de commande (8, 10, 11, 12) de la fonction du véhicule (30, 31, 33-35) actuellement à expliquer est représentée visuellement.

14. Procédé selon la revendication 12 ou 13, **caractérisé en ce que** l'explication visuelle et/ou sonore de la fonction du véhicule (30, 31, 33-35) et de son dispositif de commande (8, 10, 11, 12) s'effectue et/ou est réalisée par le biais d'une représentation animée d'une personne artificielle (15) sur le dispositif d'affichage (5) et d'une diffusion sonore.

15. Procédé selon l'une des revendications 12 à 14, **caractérisé en ce que** le dispositif de commande (8, 10, 11, 12) associé à la fonction du véhicule (30, 31, 33-35) actuellement à expliquer peut être mis en valeur ou modifié visuellement sur le dispositif d'affichage (5).

16. Procédé selon l'une des revendications 12 à 15, **caractérisé en ce que** le mouvement de commande du dispositif de commande (8, 10, 11, 12) associé à la fonction du véhicule (30, 31, 33-35) actuellement à expliquer peut être représenté sur le dispositif d'affichage (5).

17. Procédé selon l'une des revendications 12 à 16, **caractérisé en ce que** la représentation visuelle du dispositif de commande (8, 10, 11, 12) associé à la fonction du véhicule (30, 31, 33-35) actuellement à expliquer peut être grossie et/ou réduite sur le dispositif d'affichage (5).

18. Procédé selon la revendication 17, **caractérisé en ce que** le grossissement ou la réduction de la représentation s'effectue en fonction du déroulement de l'explication de la fonction du véhicule (30, 31, 33-35) ou du dispositif de commande (8, 10, 11, 12) associé à la fonction du véhicule.

19. Procédé selon l'une des revendications 12 à 18, **caractérisé en ce que** les données de véhicule englobent des données supplémentaires sur des éléments de véhicule (20-26, 32) et leur utilisation, leur mode de fonctionnement et/ou leur maniement et/ou des données sur des états du véhicule et au moins un élément de véhicule (20-26, 32) peut être représenté et/ou est représenté visuellement et sa fonction et/ou son maniement peut être expliqué et/ou est expliqué visuellement par animation et/ou de manière sonore.

20. Procédé selon la revendication 19, **caractérisé en ce que** l'explication visuelle et/ou sonore de l'élément de véhicule (20-26, 32) et/ou de son fonctionnement et/ou de son maniement s'effectue et/ou est réalisée par le biais d'une représentation animée d'une personne artificielle (15) sur le dispositif d'affichage (5) et/ou d'un dispositif de diffusion sonore (7).

21. Procédé selon la revendication 19 ou 20, **caractérisé en ce que** l'élément de véhicule (20-26, 32) actuellement à expliquer est mis en valeur visuellement ou modifié visuellement sur le dispositif d'affichage (5).

22. Procédé selon l'une des revendications 19 à 21, **caractérisé en ce que** la disposition dans le véhicule automobile du maniement et/ou de la fonction de l'élément de véhicule (20-26, 32) est représentée sur le dispositif d'affichage (5).
